# EUROPÄISCHE PATENTSCHRIFT

(11) **EP 0 825 051 B1**
(45) Veröffentlichungstag und Bekanntmachung des Hinweises auf die Patenterteilung: **20.12.2000**
(21) Anmeldenummer: 97110994.7
(22) Anmeldetag: 02.07.1997
(51) Int. Cl.: B60J 7/22

(54) **Windschott für ein Cabriolet**
Wind deflector for convertible
Déflecteur de vent pour cabriolet

(30) Priorität: 10.08.1996 DE 19632352
(43) Veröffentlichungstag der Anmeldung: 25.02.1998
(73) Patentinhaber: Dr.Ing.h.c. F. Porsche Aktiengesellschaft, 70435 Stuttgart (DE)
(72) Erfinder: Pfertner, Kurt, 71299 Wimsheim (DE); Stadler, Bernd, 71287 Weissach (DE)

(56) Entgegenhaltungen:
- EP-A- 0 761 484
- DE-U- 9 004 971
- DE-U- 9 114 983
- DE-U- 9 213 699

## Beschreibung

Die Erfindung bezieht sich auf ein Windschott für ein Cabriolet gemäß dem Oberbegriff des Patentanspruchs 1, wie es z.B. aus dem DE-U-90 04 971 bekannt ist.

Aus der auf die Anmelderin zurückgehenden EP-A-761 484, die am 12.3.1997 veröffentlicht worden ist, ist folgendes bekannt:
*Windschott für ein Cabriolet mit einem feststehenden Überrollbügel, das in seiner aufrechten Betriebsstellung am Überrollbügel festlegbar ist, wobei der Überrollbügel einen etwa in Höhe der Fahrzeug-Gürtellinie verlaufenden, sich in Fahrzeugquerrichtung erstreckenden Rohrabschnitt umfaßt, von dem in seitlich außenliegenden Bereichen nach oben hin vorstehende Bügelabschnitte weggeführt sind, und wobei sich das Windschott aus einem Mittelteil und zwei Seitenteilen zusammensetzt, wobei die Seitenteile in die Öffnungen der Bügelabschnitte und das Mittelteil in den durch die Bügelabschnitte und den querverlaufenden Rohrabschnitt begrenzten Ausschnitt des Überrollbügels eingesetzt sind, **und wobei weiterhin** das durch eine transparente, stehend angeordnete Scheibe gebildete Mittelteil des Windschotts über zumindest eine untere Steckverbindung und beabstandet angeordnete obere Verbindungen in seiner Betriebsstellung am Überrollbügel in Lage gehalten ist.*

Ein durch eine aufrechte Scheibe gebildetes Mittelteil des Windschotts ist über zumindest eine Steckverbindung und/oder eine Rastverbindung am Überrollbügel in Lage gehalten.

Aufgabe der Erfindung ist es, die Halterung eines Mittelteils des Windschotts so weiterzubilden, daß einerseits das Einsetzen des Mittelteils von der Sitzposition aus in einfacher Weise möglich ist, wogegen ein unbeabsichtigtes Lösen des Mittelteils vom Überrollbügel - insbesondere im Fahrbetrieb - verhindert werden soll.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch eine untere Steckverbindung und zwei obere Rastverbindungen ein einfaches Einsetzen und Festlegen des Windschottmittelteils gegeben ist. Durch die federbelasteten Rasthebel der lösbaren Rastverbindungen wird sichergestellt, daß das Mittelteil erst nach einem manuellen Freischwenken der Rasthebel demontierbar ist. Die unteren Steckverbindungen bewirken eine Vorfixierung des Mittelteils am Überrollbügel. Durch eine nachfolgende Schwenkbewegung nach vorne wird das Mittelteil an den Clipsböcken automatisch verrastet. Dies stellt eine hohe Sicherheit gegen Mißbrauch dar. Die an den Aufnahmen für die Zapfen vorgesehenen Federelemente bewirken eine Klapperfreiheit der Halterung. Der Clipsbock und die am Einfaßrahmen vorgesehenen Bauteile der Rastverbindung bilden stylistisch eine geschlossene Einheit.

Ein Ausführungsbeispiel der Erfindung ist in den Zeichnungen dargestellt und wird im folgenden näher beschrieben.

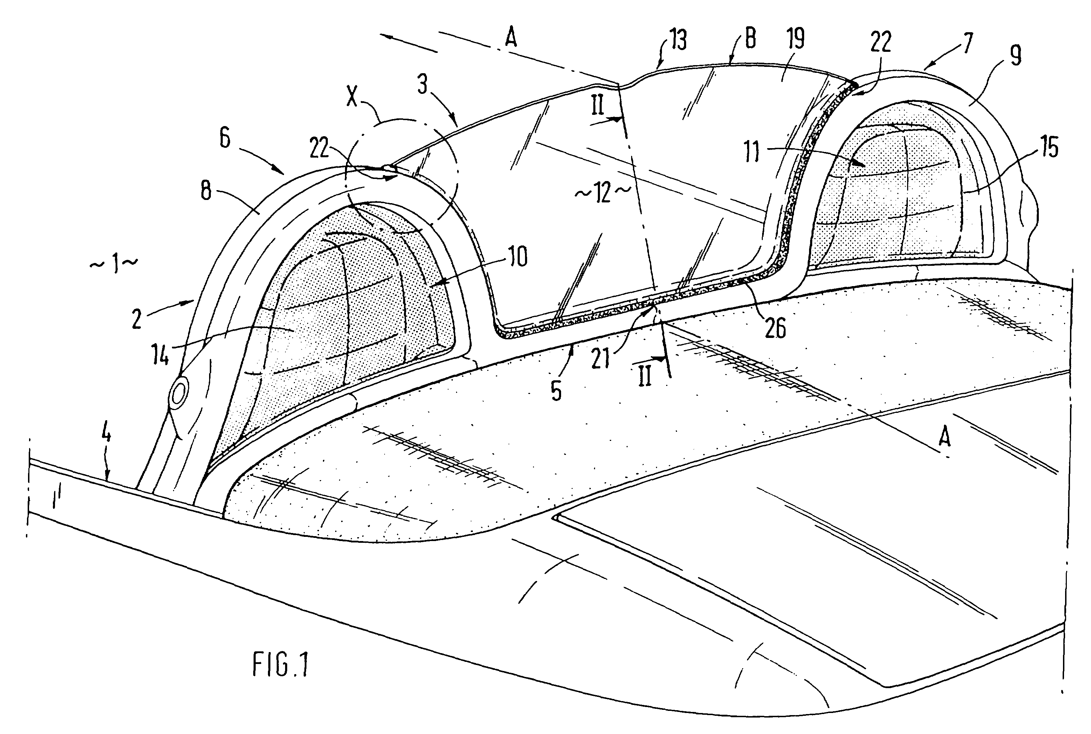

Es zeigen
- Fig. 1: eine perspektivische Ansicht von hinten auf einen feststehenden Überrollbügel eines offenen Kraftfahrzeuges (Cabriolet) mit einem am Überrollbügel angebrachten mehrteiligen Windschott,
- Fig. 2: einen Schnitt nach der Linie II-II der Fig. 1 durch die untere Steckverbindung zwischen dem Mittelteil des Windschotts und dem Überrollbügel,
- Fig. 3: eine Einzelheit X der Fig. 1 in größerer Darstellung, die eine obere Rastverbindung zwischen dem Mittelteil des Windschotts und dem Überrollbügel zeigt, wobei ein Rasthebel der Rastverbindung eine Verriegelungsstellung einnimmt,
- Fig. 4: eine Ansicht entsprechend Fig. 3, jedoch ist hier der Rasthebel in eine Freigabestellung verschwenkt, in der die Rastverbindung gelöst werden kann,
- Fig. 5: einen Schnitt nach der Linie V-V der Fig. 3 in größerem Maßstab und

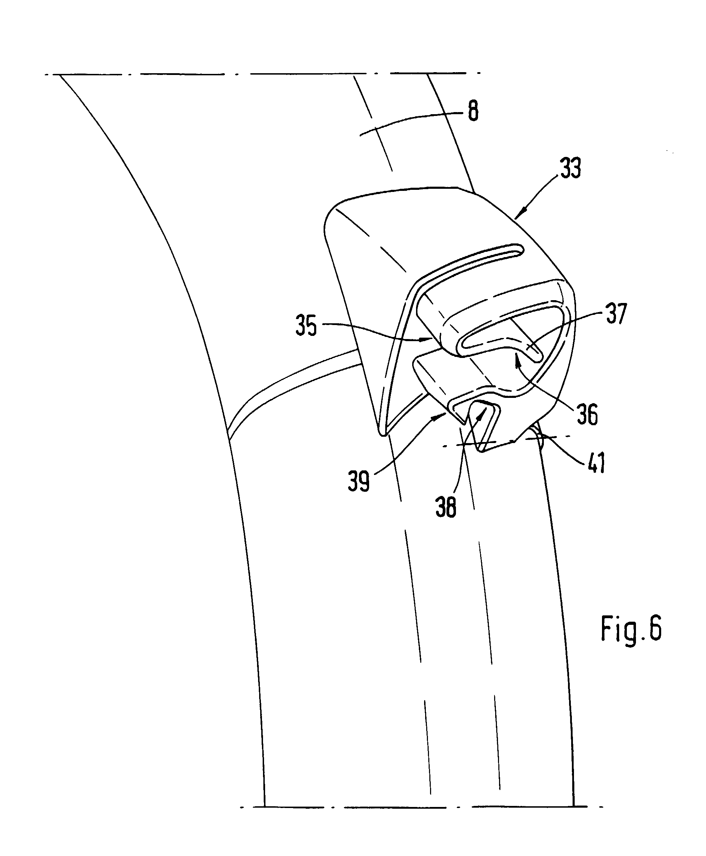

- Fig. 6: eine perspektivische Ansicht auf den am Überrollbügel angebrachten Clipsbock der lösbaren Rastverbindung.

Ein nicht näher dargestelltes zweisitziges offenes Kraftfahrzeug (Cabriolet) weist hinter den vorderen Sitzen 1 einen feststehenden Überrollbügel 2 auf, wobei am Überrollbügel 2 ein Windschott 3 angebracht ist, durch das die auf den vorderen Sitzen 1 befindlichen Insassen vor von rückwärts her einströmender störender Luftströmung geschützt werden (unangenehme Zugerscheinungen im Kopf- bzw. Nackenbereich).

Der über aufrechte Stützabschnitte am Fahrzeugboden festgelegte Überrollbügel 2 weist etwa in Höhe der Fahrzeug-Gürtellinie 4 zumindest einen sich in Fahrzeugquerrichtung erstreckenden Rohrabschnitt 5 auf, der im Ausführungsbeispiel einen leicht gebogenen Formverlauf aufweist. In seitlichen außenliegenden Bereichen 6 und 7 sind vom querverlaufenden Rohrabschnitt 5 zwei nach oben hin vorstehende Bügelabschnitte 8 bzw. 9 weggeführt. Jeder Bügelabschnitt 8 bzw. 9 begrenzt zusammen mit einem Teilbereich des querverlaufenden Rohrabschnitts 5 eine Öffnung 10 bzw. 11. Der Fahrzeugmittellängsebene A-A zugekehrte Bereich der Bügelabschnitte 8 bzw. 9 und ein mittlerer Bereich des Rohrabschnitts 5 definieren einen nach oben hin offenen Ausschnitt 12 des Überrollbügels 2.

Das sich in aufrechter Richtung erstreckende Windschott 3 setzt sich aus einem Mittelteil 13 und zwei Seitenteilen 14 und 15 zusammen, wobei die Seitenteile 14 und 15 in die Öffnungen 10 bzw. 11 der Bügelabschnitte 8 und 9 und das Mittelteil 13 in den Abschnitt 12 des Überrollbügels 2 eingesetzt sind.

Das Mittelteil 13 wird durch eine transparente, stehend angeordnete Scheibe 19 gebildet, die lösbar mit dem Überrollbügel 2 verbunden ist. Aus Gewichtsgründen ist die Scheibe 19 vorzugsweise aus geeignetem Kunststoff (Plexiglas) hergestellt, wobei die Scheibe 19 mit einer kratzfesten Beschichtung und/oder einer Tönung versehen sein kann. Die Scheibe 19 kann jedoch auch aus Glas gefertigt sein.

Am unteren Rand der Scheibe 19 und/oder an den beiden seitlich außenliegenden aufrechten Rändern der Scheibe 19 ist ein Einfaßrahmen 26 vorgesehen, der durch Kleben, Clipsen oder dergleichen fest mit der eingesteckten Scheibe 19 verbunden ist. Der Einfaßrahmen 26 wird im Ausführungsbeispiel durch ein einstückiges Kunststoffteil gebildet. Er kann jedoch auch aus Aluminium, Gummi oder dergleichen gefertigt sein.

Das Mittelteil 13 des Windschotts 3 ist über zumindest eine untere Steckverbindung 21 und zwei obere beabstandet angeordnete Rastverbindungen 22 in seiner Betriebsstellung B am Überrollbügel 2 in Lage gehalten, wobei das Mittelteil 13 erst nach manuellem Freischwenken von federbelasteten Rasthebeln 27 der Rastverbindungen 22 wieder vom Überrollbügel 2 lösbar ist.

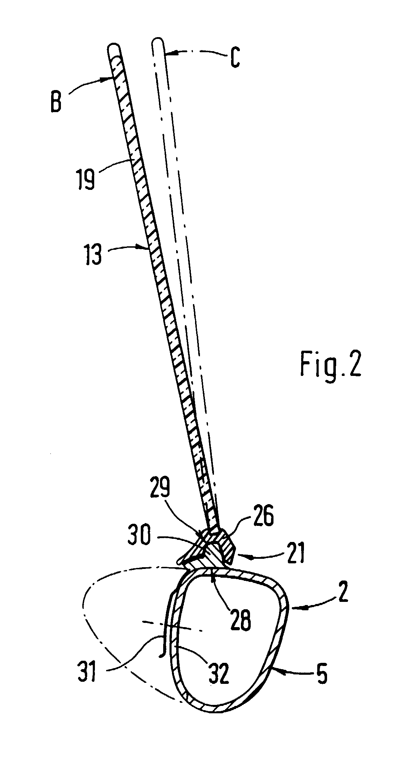

Die im Ausführungsbeispiel etwa im Bereich einer Fahrzeuglängsmittelebene A-A vorgesehene untere Steckverbindung 21 umfaßt ein Lagerelement 28 und eine mit diesem zusammenwirkende Aufnahme 29 (Fig. 2). Das Lagerelement 28 ist am querverlaufenden Rohrabschnitt 5 des Überrollbügels 2 angeordnet und zwar an dessen Oberseite. Gemäß Fig. 2 weist das Lagerelement 28 einen nach oben hin vorstehenden etwa halbkreisförmigen Lagerabschnitt 30 auf, der sich in Fahrzeugquerrichtung erstreckt und mit der korrespondierend ausgebildeten, etwa muldenförmigen Aufnahme 29 des Einfaßrahmens 26 bei aufgesetztem Windschott-Mittelteil 13 in Wirkverbindung steht. Der Lagerabschnitt 30 und die Aufnahme 29 sind so ausgebildet, daß eine Schwenkbewegung in geringem Umfang (z.B. etwa 15° +/-5°) des Mittelteils 13 bei der Montage möglich ist.

Das aus Kunststoff gefertigte Lagerelement 28 weist eine abschnittsweise umspritzte Nietlasche 31 auf, wobei der nicht umspritzte, nach unten ragende Bereich der Nietlasche 31 an einer aufrechten Wandung 32 des Rohrabschnitts 5 befestigt ist (beispielsweise durch Niete). Das Lagerelement 28 könnte jedoch auch dem Einfaßrahmen 26 und die Aufnahme 29 dem Überrollbügel 2 zugeordnet sein (kinematische Umkehr).

Das Mittelteil 13 wird im Ausführungsbeispiel bei der Montage von oben bzw. schräg hinten mit der Aufnahme 29 auf den vorstehenden Lagerabschnitt 30 aufgesetzt (Entnahme- bzw. Einführstellung C). Nach dem Herstellen der unteren Steckverbindung 21 (Vorfixierung) wird das Mittelteil 13 um das untere Lagerelement 28 nach vorne geschwenkt, bis das Mittelteil 13 automatisch an den oberen Rastverbindungen 22 verrastet (Betriebsstellung B). In Fig. 2 ist die Betriebsstellung B mit durchgezogenen Linien und die Entnahme bzw. Einführstellung C strichpunktiert dargestellt.

Jede Rastverbindung 22 umfaßt einen am angrenzenden Bügelabschnitt 8 bzw. 9 des Überrollbügels 2 befestigten Clipsbock 33, der bei montiertem Mitteilteil 13 mit einem angeformten Zapfen 34 des Einfaßrahmens 26 und einem schwenkbaren federbelasteten Rasthebel 27 zusammenwirkt.

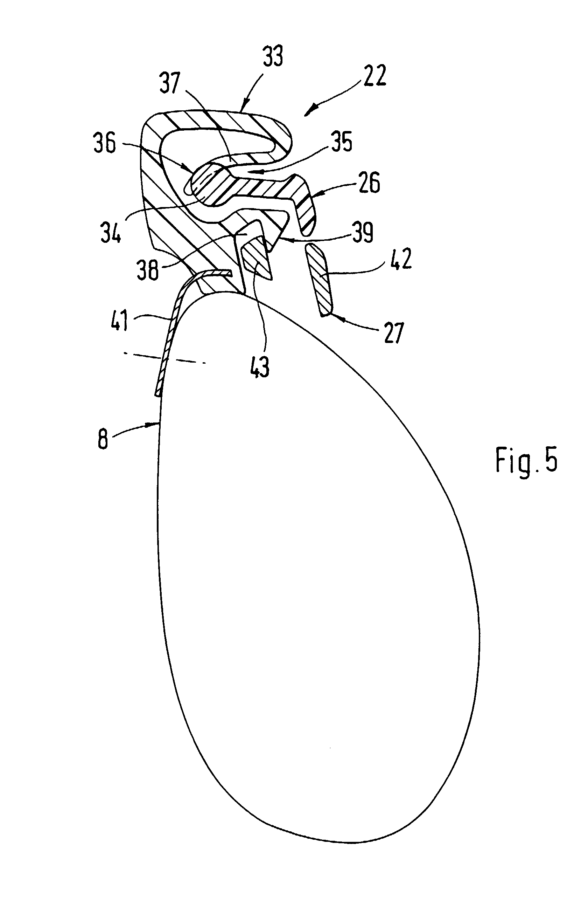

Jeder etwa horizontal ausgerichtete, sich in Fahrzeugquerrichtung erstreckende, einstückig mit dem Einfaßrahmen 26 verbundene Zapfen 34 ragt bei montiertem Mittelteil 13 in eine einseitig offene obere Aufnahme 35 des Clipsbockes 33 hinein und steht dort mit einem Federelement 36 in Wirkverbindung (Fig. 5). Dadurch werden Klappergeräusche bei eingesetztem Mittelteil 13 vermieden. Die offene Seite der Aufnahme 35 erstreckt sich entgegen der Fahrtrichtung des Kraftfahrzeuges. Das Federelement 36 ist gemäß Fig. 5 einstückig mit der oberen Aufnahme 35 des aus Kunststoff gefertigten Clipsbockes 33 ausgebildet und wird durch einen nach innen ragenden federnden Steg 37 gebildet, der abschnittsweise am Zapfen 34 unter Vorspannung aufliegt. Das Federelement 36 könnte jedoch auch durch ein separates Teil aus Federstahl gebildet werden, das nachträglich in die Aufnahme 35 eingeclipst ist (nicht näher dargestellt).

Unterhalb der oberen Aufnahme 35 ist am Clipsbock 33 eine hinterschnittene, aufrecht verlaufende Aufnahmenut 38 mit einer vorgelagerten Einführschräge 39 vorgesehen, wobei der federbelastete Rasthebel 27 beim nach vorne Schwenken des Mittelteils 13 entlang der Einführschräge 39 nach unten gleitet bis er in die hinterschnittene, nach unten hin offene Aufnahmenut 38 eingreift. Bei diesem Vorgang erfolgt ein zwangsweises seitliches Auslenken des Rasthebels 27.

Der federbelastete Rasthebel 27 ist am Einfaßrahmen 26 um eine Drehachse 40 schwenkbar gelagert und von einer Verriegelungsstellung D in eine Freigabestellung E bewegbar und umgekehrt. Die nicht näher dargestellte Feder beaufschlagt den Rasthebel 27 in Richtung Verriegelungsstellung D.

Da die Rasthebel 27 auf der den vorderen Sitzen 1 abgekehrten Seite des Windschotts 3 angeordnet sind, ist ein Lösen der Rastverbindung 22 von der Sitzposition aus nicht möglich. Zum Lösen der Rastverbindung 22 müssen beide Rasthebel 27 entgegen der Federwirkung von der Verriegelungsstellung D in die Freigabestellung E verschwenkt werden, in der sie außer Eingriff mit den Aufnahmenuten 38 gelangen. Erst danach ist ein Verschwenken des Mittelteils 13 von der Betriebsstellung B nach hinten in die in Fig. 2 dargestellte Stellung C möglich, in der das Mittelteil 13 entfernt werden kann. Der Clipsbock 33 und die Bauteile der Rastverbindung 22 bilden stylistisch eine geschlossene Einheit. Gemäß Fig. 5 ist der Clipsbock 33 unter Vermittlung einer Nietlasche 41 am Überrollbügel 2 befestigt (z.B. vernietet).

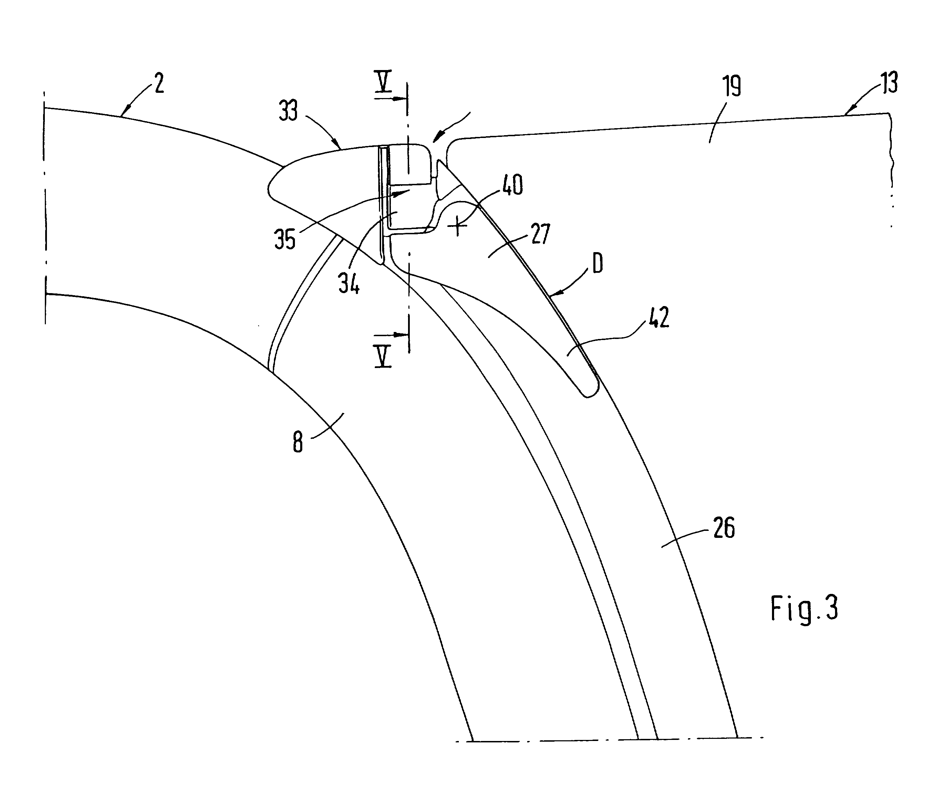

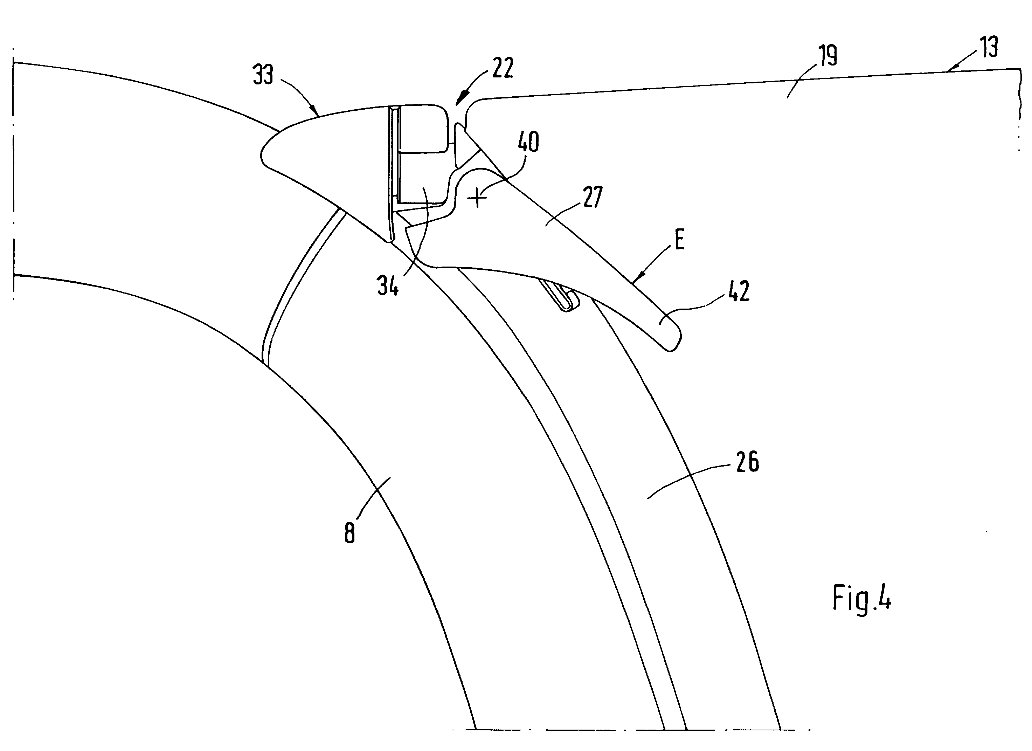

Der Rasthebel 27 setzt sich gemäß den Fig. 3 bis 5 aus einem hintenliegenden Griffabschnitt 42 und einer mit der Aufnahmenut 38 in Wirkverbindung stehenden Rastzunge 43 zusammen. Die Rastzunge 43 ist einstückig mit dem Griffabschnitt 42 ausgebildet und etwa parallel zu diesem ausgerichtet.

Der beim Einsetzten des Mittelteils 13 mit der Einführschräge 39 zusammenwirkende Bereich der Rastzunge weist einen gebogenen Formverlauf auf.

## Patentansprüche

1. Windschott (3) für ein Cabriolet mit einem feststehenden Überrollbügel (2), das in seiner aufrechten Betriebsstellung (B) am Überrollbügel (2) festlegbar ist, dadurch gekennzeichnet, daß der Überrollbügel (2) einen etwa in Höhe der Fahrzeug-Gürtellinie (4) verlaufenden, sich in Fahrzeugquerrichtung erstreckenden Rohrabschnitt (5) umfaßt, von dem in seitlich außenliegenden Bereichen (6 und 7) nach oben hin vorstehende Bügelabschnitte (8 bzw. 9) weggeführt sind und daß sich das Windschott (3) aus einem Mittelteil (13) und zwei Seitenteilen (14 und 15) zusammensetzt, wobei die Seitenteile (14 und 15) in die Öffnungen (10 bzw. 11) der Bügelabschnitte (8 bzw. 9) und das Mittelteil (13) in den durch die Bügelabschnitte (8 und 9) und den querverlaufenden Rohrabschnitt (5) begrenzten Ausschnitt (12) des Überrollbügels (2) eingesetzt sind, wobei das durch eine transparente, stehend angeordnete Scheibe (19) gebildete Mittelteil (13) des Windschotts (3) über zumindest eine untere Steckverbindung (21) und beabstandet angeordnete obere Rastverbindungen (22) in seiner Betriebsstellung (B) am Überrollbügel (2) in Lage gehalten ist und wobei das Mittelteil (13) erst nach einem Freischwenken von federbelasteten Rasthebeln (27) der Rastverbindungen (22) vom Überrollbügel (2) lösbar ist.

2. Windschott nach Anspruch 1, dadurch gekennzeichnet, daß die untere Steckverbindung (21) durch ein Lagerelement (28) und eine mit diesem zusammenwirkende Aufnahme (29) gebildet wird.

3. Windschott nach Anspruch 2, dadurch gekennzeichnet, daß das Lagerelement (28) am querverlaufenden Rohrabschnitt (5) des Überrollbügels (2) angeordnet ist und daß die Aufnahme (29) an einem Einfaßrahmen (26) der Scheibe (19) ausgebildet ist.

4. Windschott nach den Ansprüchen 1 bis 3, dadurch gekennzeichnet, daß das Lagerelement (28) einen nach oben hin vorstehenden, etwa halbkreisförmig ausgebildeten Lagerabschnitt (30) aufweist, der mit der korrespondierenden muldenförmigen Aufnahme (29) bei aufgesetztem Windschott-Mittelteil (13) in Wirkverbindung steht, wobei der Lagerabschnitt (30) und die Aufnahme (29) so ausgebildet sind, daß eine definierte Schwenkbewegung des Mittelteils (13) bei der Montage möglich ist.

5. Windschott nach Anspruch 1, dadurch gekennzeichnet, daß jede obere Rastverbindung (22) einen am angrenzenden Bügelabschnitt (8, 9) des Überrollbügels (2) angeordneten Clipsbock (33) umfaßt, der bei montiertem Mittelteil (13) mit einem angeformten Zapfen (34) und einem federbelasteten Rasthebel (27) des Einfaßrahmens (26) zusammenwirkt.

6. Windschott nach Anspruch 5, dadurch gekennzeichnet, daß der Zapfen (34) in eine einseitig offene Aufnahme (35) des Clipsbockes (33) hineinragt und dort mit einem Federelement (36) in Wirkverbindung steht.

7. Windschott nach Anspruch 6, dadurch gekennzeichnet, daß das Federelement (36) einstückig mit der Aufnahme (35) des aus Kunststoff gefertigten Clipsbockes (33) ausgebildet ist und durch einen gebogenen, federnden Steg (37) gebildet wird.

8. Windschott nach Anspruch 5, dadurch gekennzeichnet, daß der federbelastete Rasthebel (27) am Einfaßrahmen (26) schwenkbar gelagert ist und bei montiertem Mittelteil (13) in eine hinterschnittene Aufnahmenut (38) des Clipsbockes (33) eingreift.

9. Windschott nach Anspruch 8, dadurch gekennzeichnet, daß der aufrecht verlaufenden Aufnahmenut (38) eine Einführschräge (39) vorgelagert ist, entlang der der Rasthebel (27) bei der Montage des Mittelteils (13) entlanggleitet, bis er in die Aufnahmenut (38) eingreift.

10. Windschott nach Anspruch 1, dadurch gekennzeichnet, daß nach Herstellung der unteren Steckverbindung (21) das Mittelteil (13) am Überrollbügel (2) vorfixiert ist und daß durch eine anschließende, nach vorne gerichtete Schwenkbewegung des Mittelteils (13) eine zwangsweise Verrastung des Mittelteils (13) in den beiden oberen Rastverbindungen (22) erfolgt, wobei bei der zwangsweisen Verrastung die federbelasteten Rasthebel (27) beim Entlanggleiten auf der Einführschräge (39) in ihre Freigabestellung (E) verschwenkt werden.

## Claims

1. A draught stop (3) for a cabriolet having a stationary roll bar (2), securable in its upright operating position (B) on the roll bar (2), **characterized in that** the roll bar (2) comprises a tube portion (5) which extends substantially at the level of the waist line (4) of the vehicle and in the transverse direction of the vehicle and from which upwardly projecting roll-bar portions (8 and 9 respectively) extend away in regions (6 and 7) situated laterally on the outside, and the draught stop (3) is formed by a central part (13) and two lateral parts (14 and 15), wherein the lateral parts (14 and 15) are inserted into the openings (10 and 11 respectively) of the roll-bar portions (8 and 9) and the central part (13) is inserted into the portion (12) of the roll bar (2) bounded by the roll-bar portions (8 and 9) and the transversely extending tube portion (5), wherein the central part (13) of the draught stop (3) formed by a transparent vertical pane (19) is held in place in its operating position (B) on the roll bar (2) by way of at least one lower plug-in connexion (21) and spaced upper catch connexions (22), wherein the central part (13) is detachable from the roll bar (2) only after pivoting free from spring-loaded catch levers (27) of the catch connexions (22).

2. A draught stop according to Claim 1, **characterized in that** the lower plug-in connexion (21) is formed by a bearing member (28) and a receiving means (29) cooperating therewith.

3. A draught stop according to Claim 2, **characterized in that** the bearing member (28) is arranged on the transversely extending tube portion (5) of the roll bar (2), and the receiving means (29) is formed on an edging frame (26) of the pane (19).

4. A draught stop according to Claims 1 to 3, **characterized in that** the bearing member (28) is provided with a bearing portion (30) which projects upwards and is substantially semicircular and which is operatively connected to the corresponding trough-shaped receiving means (29) when the central part (13) of the draught stop is put into position. wherein the bearing portion (30) and the receiving means (29) are designed in such a way that a defined pivoting movement of the central part (13) is possible during assembly.

5. A draught stop according to Claim 1, **characterized in that** each upper catch connexion (22) comprises a clip support (33) arranged on the adjacent portion (8, 9) of the roll bar (2) and cooperating with an integrally formed pin (34) and a spring-loaded catch lever (27) of the edging frame (26) when the central part (13) is assembled.

6. A draught stop according to Claim 5, **characterized in that** the pin (34) projects into a receiving means (35) of the clip support (33) open on one side and is operatively connected there to a spring member (36).

7. A draught stop according to Claim 6, **characterized in that** the spring member (36) is formed integrally with the receiving means (35) of the clip support (33) produced from plastics material and is formed by a curved, resilient web (37).

8. A draught stop according to Claim 5, **characterized in that** the spring-loaded catch lever (27) is mounted pivotably on the edging frame (26) and engages in an undercut receiving groove (38) in the clip support (33) when the central part (13) is assembled.

9. A draught stop according to Claim 8, **characterized in that** the receiving groove (38) extending vertically has positioned in front thereof an insertion slope (39) along which the catch lever (27) slides during the assembly of the central part (13) until it engages in the receiving groove (38).

10. A draught stop according to Claim 1, **characterized in that** after the lower insertion connexion (21) is made the central part (13) is pre-fixed beforehand to the roll bar (2), and a forcible catching of the central part (13) in the two upper catch connexions (22) is carried out by a subsequent pivoting movement - directed forwards - of the central part (13), wherein during the forcible catching the spring-loaded catch levers (27) are pivoted into their release position (E) whilst sliding along the insertion slope (39).

## Revendications

1. Déflecteur de vent (3) pour un cabriolet avec un arceau de sécurité (2) fixe, qui dans sa position de fonctionnement (B) verticale, peut être fixé à l'arceau de sécurité (2), caractérisé en ce que l'arceau de sécurité (2) comprend un tronçon de tube (5) qui s'étend à peu près à hauteur de la ligne médiane (4) du véhicule et dans la direction transversale de ce dernier, des tronçons d'arceau (respectivement 8 et 9), qui font saillie vers le haut dans des zones (6 et 7) situées extérieurement sur les côtés, partant de ce tronçon de tube, et en ce que le déflecteur de vent (3) se compose d'une partie centrale (13) et de deux parties latérales (14 et 15), les parties latérales (14 et 15) étant insérées dans les ouvertures (respectivement 10 et 11) des tronçons d'arceau, (respectivement 8 et 9) et la partie centrale (13) étant insérée dans la découpe (12) de l'arceau de sécurité (2), délimitée par les tronçons d'arceau (8 et 9) et par le tronçon de tube (5) s'étendant transversalement, la partie centrale (13) du déflecteur de vent (3), formée par une vitre (19) transparente, disposée verticalement, étant immobilisée dans sa position de fonctionnement (B) sur l'arceau de sécurité (2), par au moins un assemblage à enfichage (21) inférieur et par des assemblages à encliquetage (22) supérieurs, disposés espacés, et la partie centrale (13) ne pouvant être séparée de l'arceau de sécurité (2) qu'après un libre pivotement de leviers d'encliquetage (27), soumis à l'action d'un ressort, des assemblages à encliquetage (22).

2. Déflecteur de vent selon la revendication 1, caractérisé en ce que l'assemblage à enfichage (21) inférieur est formé par un élément de support (28) et par un logement (29) coopérant avec celui-ci.

3. Déflecteur de vent selon la revendication 2, caractérisé en ce que l'élément de support (28) est disposé sur le tronçon de tube (5) s'étendant transversalement de l'arceau de sécurité (2) et en ce que le logement (29) est formé sur un cadre de monture (26) de la vitre (19).

4. Déflecteur de vent selon les revendications 1 à 3, caractérisé en ce que l'élément de support (28) présente un tronçon de support (30) qui dépasse vers le haut, qui a à peu près la forme d'un demi-cercle et qui est en liaison active avec le logement (29) correspondant en forme de dépression, lorsque la partie centrale (13) du déflecteur est mise en place, le tronçon de support (30) et le logement (29) étant conformés de manière à permettre un mouvement de pivotement défini de la partie centrale (13) lors du montage.

5. Déflecteur de vent selon la revendication 1, caractérisé en ce que chaque assemblage à encliquetage (22) supérieur comprend un support de clipsage (33) qui est disposé sur le tronçon (8, 9) adjacent de l'arceau de sécurité (2) et qui coopère avec un tenon (34) venu de moulage et un levier d'encliquetage (27) soumis à l'action d'un ressort du cadre de monture (26), lorsque la partie centrale (13) est montée.

6. Déflecteur de vent selon la revendication 5, caractérisé en ce que le tenon (34) s'engage dans un logement (35), ouvert d'un côté, du support de clipsage (33) et y est en liaison active avec un élément à ressort (36).

7. Déflecteur de vent selon la revendication 6, caractérisé en ce que l'élément à ressort (36) est formé d'un seul tenant avec le logement (35) du support de clipsage (33) en matière plastique et est formé par une ailette (37) élastique courbée.

8. Déflecteur de vent selon la revendication 5, caractérisé en ce que le levier d'encliquetage (27) soumis à l'action d'un ressort est monté de manière à pouvoir pivoter sur le cadre de monture (26) et s'engage dans une rainure de réception (38) détalonnée du support de clipsage (33), lorsque la partie centrale (13) est montée.

9. Déflecteur de vent selon la revendication 8, caractérisé en ce que devant la rainure de réception (38) qui s'étend verticalement est prévue une surface oblique (39) d'introduction le long de laquelle glisse le levier d'encliquetage (27) lors du montage de la partie centrale (13), jusqu'à ce qu'il s'engage dans la rainure de réception (38).

10. Déflecteur de vent selon la revendication 1, caractérisé en ce qu'après réalisation de l'assemblage par enfichage (21) inférieur, la partie centrale (13) est préfixée sur l'arceau de sécurité (2) et en ce que par un mouvement de pivotement suivant, dirigé vers le bas, de la partie centrale (13), il se produit un accrochage forcé de la partie centrale (13) dans les deux assemblages à encliquetage (22) supérieurs, les leviers d'encliquetage (27) soumis à l'action d'un ressort étant pivotés dans leur position de libération (E) lors de l'accrochage forcé et de leur glissement sur la surface oblique (39) d'introduction.
